# EUROPÄISCHE PATENTSCHRIFT

(11) **EP 2 118 027 B1**
(45) Veröffentlichungstag und Bekanntmachung des Hinweises auf die Patenterteilung: **23.03.2011**
(21) Anmeldenummer: 07845307.3
(22) Anmeldetag: 21.12.2007
(51) Int. Cl.: C03B 33/09

(54) **VERFAHREN UND VORRICHTUNG ZUM HERSTELLEN EINES TRENNSPALTS IN EINER GLASSCHEIBE**
METHOD AND DEVICE FOR THE PRODUCTION OF A DIVIDING GAP IN A GLASS PANE
PROCÉDÉ ET DISPOSITIF POUR CRÉER UNE FENTE DE SÉPARATION DANS UNE FEUILLE DE VERRE

(30) Priorität: 05.01.2007 AT 272007
(43) Veröffentlichungstag der Anmeldung: 18.11.2009
(73) Patentinhaber: Lisec Maschinenbau GmbH, 3353 Seitenstetten (AT)
(72) Erfinder: LISEC, Peter, A-3363 Hausmening (AT)
(74) Vertreter: Secklehner, Günter
(86) Internationale Anmeldenummer: PCT/AT2007/000583
(87) Internationale Veröffentlichungsnummer: WO 2008/080182

(56) Entgegenhaltungen:
- AT-A1- 501 000
- US-A- 3 790 362
- US-A1- 2004 251 290

## Beschreibung

Die Erfindung betrifft ein Verfahren gemäß dem Oberbegriff des Anspruches 1 sowie eine Vorrichtung gemäß dem Oberbegriff des Anspruchs 12.

Aus der AT 501 000 A1 derselben Anmelderin ist ein Verfahren zum Teilen von Glas unter Verwendung von Laserstrahlen bekannt, bei dem durch gezieltes Durchleiten eines Laserstrahls durch ein Glas in diesem thermische Spannungen hervorgerufen werden, die die Bildung eines Trennspalts im Glas bewirken. Bei diesem und auch bei anderem aus dem Stand der Technik bekannten Verfahren liegt die Hauptschwierigkeit darin, die Strahlungsenergie des verwendeten Laserstrahles im Bereich des herzustellenden Trennspalts in das Glas zu übertragen, wobei der hohe Transmissionsgrad des zu bearbeitenden Materials und der relativ geringe absorbierte Anteil an Strahlungsenergie besondere Maßnahmen zur Beeinflussung des Strahlenverlaufs im Glas erfordert, insbesondere ein mehrfaches Durchleiten des Laserstrahls durch den Bereich des herzustellenden Trennspalts. Die bei den bekannten Verfahren eingesetzten Mittel zur Herbeiführung eines derartigen Strahlenverlaufs sind insgesamt sehr aufwendig und in ihrem Wirkungsgrad noch nicht optimal.

US 2004/0251290 A1 offenbart ein Verfahren zur Herstellung eines Trennspaltes in Glasmaterial, bei dem ein Ritz in der Glasoberfläche durch ein mechanisches Ritzwerkzeug oder einem Laserstrahl erzeugt wird und danach ausgehend von diesem Ritz eine Erweiterung des Ritzes zu einem Trennspalt gewünschter Solltiefe durch mechanische oder thermische Spannungen im Glasmaterial erfolgt, indem in den Bereich des Ritzes elastische Wellen eingeleitet werden oder die bei der Erzeugung des Ritzes durch den Laserstrahl erwärmte Trennspaltzone einer starken lokalen Abkühlung unterzogen wird.

Ausgehend von diesem Stand der Technik ist es Aufgabe der Erfindung, ein Verfahren zum Herstellen eines Trennspalts in einer Glasscheibe bereitzustellen, das sich durch einen guten Wirkungsgrad auszeichnet und mit geringerem gerätetechnischem Aufwand ausführen lässt. Der Begriff Glasscheibe umfasst dabei nicht nur ebene Glastafeln, sondern kann auch gekrümmte Glaskörper und auch aus mehreren Glaskörpern zusammengesetzte Glasbauteile.

Diese Aufgabe der Erfindung wird durch ein Verfahren mit den Merkmalen des Anspruchs 1 gelöst. Durch die im wesentlichen reflexionsfreie und brechungsfreie Einleitung des Strahlenbündels, insbesondere eines Laserstrahls in die zu bearbeitende Glasscheibe wird die im Strahlenbündel enthaltene Strahlungsenergie annähernd vollständig in die Glasscheibe eingebracht und steht somit bei gleichem Energieeinsatz eine höhere Strahlungsleistung für die Herstellung des Trennspalts zur Verfügung. Das Strahlenbündel muss dadurch nicht, wie aus dem Stand der Technik bekannt, mehrfach durch den zu erwärmenden Bereich der Glasscheibe geleitet werden, wodurch auch der gerätetechnische Aufwand reduziert ist.

Kennzeichen der Erfindung ist weiters, dass das Strahlenbündel durch ein optisches Bauelement bis an die zu bearbeitende Glasscheibe herangeführt wird und dabei ein Zwischenraum zwischen einer Strahlenaustrittsfläche am optischen Bauelement und einer ersten Oberfläche der Glasscheibe mit einer Flüssigkeit gefüllt ist und das Strahlenbündel durch diese Flüssigkeit im wesentlichen brechungsfrei und reflexionsfrei in die Glasscheibe eingeleitet wird. Durch diese Flüssigkeit werden das optische Bauelement und die Glasscheibe gewissermaßen optisch gekoppelt, wodurch abweichend vom bekannten Stand der Technik an der ersten Oberfläche der Glasscheibe kaum Verluste durch Reflexion oder Brechung des Strahlenbündels auftreten.

Diese optische Kopplung zwischen dem optischen Bauelement und der Glasscheibe erfolgt umso besser, wenn die Flüssigkeit zumindest annähernd denselben Brechungsindex wie das Material der Glasscheibe aufweist. Falls das optische Bauelement und die Glasscheibe unterschiedliche Brechungsindizes aufweisen, kann für die Flüssigkeit insbesondere ein Brechungsindex gewählt werden, der zwischen den beiden Brechungsindizes von dem optischen Bauelement und der Glasscheibe liegt, z.B. das arithmetische Mittel der beiden Brechungsindizes bildet.

Die Flüssigkeit zur optischen Koppelung des optischen Bauelements und der Glasscheibe enthält vorteilhaft einen oder mehrere Bestandteile ausgewählt aus einer Gruppe umfassend Wasser, Glyzerin, Gel oder Netzmittel zur Herabsetzung der Oberflächenspannung der Flüssigkeit, wobei sich diese Bestandteile durch einen hohen Transmissionsgrad sowie einen niedrigen Absorbtionsgrad für die im Strahlenbündel übertragene Strahlungsenergie besitzen, also optisch weitgehend klar sind. Die Energieverluste des Strahlenbündels beim Durchdringen der Flüssigkeitsschicht sind dadurch sehr gering, weiters kann durch die genannten Bestandteile der Brechungsindex der Flüssigkeit optimal eingestellt werden.

Für die Bearbeitung von Glasscheiben aus verschiedenen, gängigen Glasmaterialien, ist es von Vorteil, wenn der Brechungsindex (Verhältnis der Lichtgeschwindigkeit im Vakuum zur Lichtgeschwindigkeit im Vergleichsmedium) der Flüssigkeit vorzugsweise aus einem Bereich mit einer unteren Grenze von 1,2 und 1,9, insbesondere zwischen 1,35 und 1,75 gewählt ist.

Eine weitere vorteilhafte Ausführungsvariante des Verfahrens besteht darin, dass das Strahlenbündel mit einem, bezogen auf ein Einfallslot in einem Eintrittspunkt des Strahlenbündels, schrägen Einfallswinkel durch die erste Oberfläche in die Glasscheibe eingeleitet wird. Durch dieses schräge Einleiten des Strahlenbündels wird verhindert, dass das Strahlenbündel an einer zweiten, von der ersten Oberfläche distanzierten, Oberfläche der Glasscheibe in sich zurückreflektiert wird und dadurch nur eingeschränkte Möglichkeiten der Strahlenführung besteht, und weiters durch das reflektierte Strahlenbündel das optische Bauelement und/oder die Strahlungsquelle möglicherweise beschädigt wird.

Der Einfallswinkel des Strahlenbündels an der ersten Oberfläche kann dabei insbesondere so gewählt sein, dass an der zweiten Oberfläche der Glasscheibe eine Totalreflexion des Strahlenbündels erfolgt. Dadurch, dass in diesem Fall kein Anteil des Strahlenbündels an der zweiten Oberfläche die Glasscheibe verlässt, verbleibt die gesamte Strahlungsenergie des Strahlenbündels im Inneren der Glasscheibe und steht zur Herstellung des Trennspalts zur Verfügung.

Zur Erzielung des Effekts einer Totalreflexion des Strahlenbündels an der zweiten Oberfläche der Glasscheibe bei den gängigsten Glasmaterialien, wird der Einfallswinkel vorteilhaft aus einem Bereich mit einer unteren Grenze von 40 Grad und einer oberen Grenze von 70 Grad gewählt.

Eine zusätzliche Möglichkeit, den Strahlenverlauf und damit die Bildung des Trennspalts in der Glasscheibe zu beeinflussen besteht darin, dass das Strahlenbündel durch eine Fokussiereinrichtung in einem konvergenten Verlauf gebracht wird und beim Eintritt in die Glasscheibe konvergent gebündelt ist. Dadurch besteht die Möglichkeit, einen Brennpunkt des Strahlenbündels und damit eine hohe Energiedichte im Inneren der Glasscheibe zu bewirken.

Ein derartiger Brennpunkt eines Strahlenbündels kann dabei vorteilhaft zumindest annähernd an der ersten Oberfläche oder an der zweiten Oberfläche der Glasscheibe positioniert werden, wodurch die Bildung des Trennspalts ausgehend von einer der Oberflächen begünstigt wird.

Zur Erhöhung des örtlichen Energieeintrags, kann die Bildung des Trennspalts beim erfindungsgemäßen Verfahren weiters mit zwei oder mehr Strahlenbündeln erfolgen. Durch diese Verwendung von zumindest zwei Strahlenbündeln kann entweder die Energie aus zwei Strahlenbündeln in einem Wirkbereich kombiniert werden dadurch eine effektive Möglichkeit einen Spannungsgradienten in der Glasscheibe zu erzeugen genutzt werden.
Bei der Verwendung von mehreren Strahlenbündeln können zumindest zwei Strahlenbündel in unterschiedlichen Richtungen in die Glasscheibe eingeleitet werden, das heißt, dass deren Verlaufsebenen zueinander einen von Null verschiedenen Winkel einnehmen. Diese unterschiedlichen Richtungen können dabei, bei Betrachtung in Richtung des Einfallslots, eingestellt sein, jedoch auch durch unterschiedliche Einfallswinkel der beiden Strahlenbündel beim Eintritt in die Glasscheibe gebildet werden. Durch diese vielfältigen Möglichkeiten, die Strahlenverläufe im Inneren der Glasscheibe einzustellen, kann die Ausbildung des Spannungsgradienten flexibel gestaltet und an die Eigenschaften der Glasscheibe, beispielsweise deren Dicke oder deren Brechungszahl, angepasst werden.

Eine hohe Leistung bei der Herstellung des Trennspalts kann erzielt werden, wenn die zwei oder mehr Strahlenbündel im Wesentlichen in einem gemeinsamen Schnittpunkt im Inneren der Glasscheibe zusammenwirken, wodurch sich die Energieleistungen der einzelnen Strahlenbündel summieren.

Eine besonders hohe Energiedichte in der Glasscheibe kann erreicht werden, wenn die in einem gemeinsamen Schnittpunkt zusammenfallenden Strahlenbündel konvergent verlaufen, und deren Brennpunkt jeweils in den gemeinsamen Schnittpunkt fällt. Dadurch kann in einem örtlich scharf begrenzten Gebiet eine extrem hohe thermische Spannung zur Herstellung des Trennspalts bewirkt werden.

Die zumindest zwei Strahlenbündel, die bei der Herstellung des Trennspalts eingesetzt werden, können vorteilhaft durch Strahlteilung aus einem Hauptstrahlenbündel gebildet werden, wodurch nur eine einzige Strahlenquelle zur Erzeugung der Hochenergiestrahlung, insbesondere nur ein Lasergerät erforderlich ist und der Geräteaufwand niedrig gehalten werden kann.

Möglich ist auch, dass die Strahlungsleistung von zumindest zwei Strahlenbündeln in einen Schnittpunkt konzentriert wird, wodurch die zum Erzeugen eines Trennspalts in einer Glasscheibe erforderliche Energiedichte erzielt wird. Dadurch kann unabhängig von der Art und Weise, wie die Strahlenbündel in die Glasscheibe eingeleitet werden, die zur Trennung der Glasscheibe notwendige thermische Spannung gezielt erzeugt werden, indem die Leistung der Strahlenbündel so hoch gewählt wird, dass durch die Überlagerung im Schnittpunkt eine ausreichende Spannungsspitze induziert wird, während die Energie der einzelnen Strahlenbündel für sich allein betrachtet keine Materialtrennung in der Glasscheibe hervorruft, also die erwünschte Wirkung nur im Schnittpunkt eintritt, ohne an anderen Stellen eine unerwünschte Trennspaltbildung auftritt.

Bei den vorgenannten Verfahren werden durch die Einwirkung eines oder mehrerer Strahlenbündel hohe thermischen Spannungen in der Glasscheibe ausgelöst, die gegebenenfalls im Addition mit bereits im Glas vorhandenen Eigenspannungen oder mechanischen Spannungen die Festigkeitsgrenzen des Glasmaterials überschreiten und dadurch die Bildung des Trennspaltes bewirken. Zusätzlich kann durch die hohe örtliche Energiekonzentration die molekulare Struktur und damit das Gefüge der Glasscheibe örtlich verändert werden, insbesondere die chemische Verbindung des Glases teilweise aufgelöst werden, wodurch einerseits die Festigkeitsgrenzen örtlich sinken können und gleichzeitig der Absorbtionsgrad erhöht wird, wodurch der örtliche Energieeintrag weiter steigt und die Bildung des Trennspalts leichter ausgelöst bzw. zusätzlich gefördert wird.

Eine weitere Aufgabe der Erfindung besteht darin, eine Vorrichtung bereitzustellen, die eine im Wesentlichen reflexionsfreie und brechungsfreie Einleitung eines Strahlenbündels in eine Glasscheibe ermöglicht.

Diese Aufgabe wird durch eine Vorrichtung mit den Merkmalen des Anspruchs 12 gelöst, und ist diese somit insbesondere für die Durchführung der erfindungsgemäßen Verfahren geeignet.

Der gegenüber dem Stand der Technik überraschende Vorteil der erfindungsgemäßen Vorrichtung besteht in der im wesentlichen reflexions- und brechungsfreien und dadurch weitgehend verlustfreien Einleitung eines Strahlenbündels, insbesondere eines Laserstrahls in die zu bearbeitende Glasscheibe. Dies wird durch die optische Kopplung des optischen Bauelements mit der zu bearbeitenden Glasscheibe mit Hilfe der Flüssigkeit erzielt. Die Kombination aus dem optischen Bauelement, der Flüssigkeit und der Glasscheibe stellt für das Strahlenbündel im wesentlichen einen optisch homogenen Körper dar, wodurch an den Grenzflächen zwischen dem optischen Bauteil und der Flüssigkeit bzw. zwischen der Flüssigkeit und der Glasscheibe Reflexionserscheinungen und Brechungserscheinungen weitgehend unterdrückt sind.

Die Flüssigkeit, die die Strahlenaustrittsfläche des optischen Bauelements als auch die Glasscheibe benetzt, bewirkt weiters, dass geringe optische Unzulänglichkeiten durch Formfehler an den Oberflächen des optischen Bauelements bzw. der Glasscheibe nicht zum Tragen kommen und das Strahlenbündel im wesentlichen ohne Verluste durch derartige Oberflächenfehler in die Glasscheibe eingeleitet wird.

Der Abstand zwischen der Strahlaustrittsfläche des optischen Bauelements und der ersten Oberfläche der zu bearbeitenden Glasscheibe beträgt vorteilhaft zwischen 0,05 mm und 1,0 mm, das heißt, dass sowohl mit einem sehr dünnen Flüssigkeitsfilm, als auch mit einer dickeren Flüssigkeitsschicht die optische Kopplung des optischen Bauelements mit der Glasscheibe erreicht werden kann. Diese optische Kopplung mit Hilfe der Flüssigkeit ist somit unempfindlich gegenüber Schwankungen des Abstandes, die zum Beispiel durch Formabweichungen der Glasscheibe und/oder durch Führungsungenauigkeiten einer die Vorrichtung tragenden Bearbeitungsmaschine bewirkt werden.

Das optische Bauelement kann vorteilhaft eine Reflexionsfläche zur Umlenkung des Strahlenbündels aufweisen, wodurch insbesondere ein zum Einfallslot paralleles Strahlenbündel an der Reflexionsfläche umgelenkt und bezüglich des Einfallslots schräg in die Glasscheibe eingeleitet werden kann.

Die Reflexionsfläche des optischen Bauelements ist dabei gegenüber einem Einfallslot der ersten Oberfläche um einen Einstellwinkel, insbesondere aus einem Bereich mit einer unteren Grenze von 20° und einer oberen Grenze von 30° schräg angeordnet. Dadurch wird ein ursprünglich lotrecht einfallendes Strahlenbündel in einen Einfallswinkel zwischen 40° und 60° umgelenkt.

Um den Einfallswinkel des Strahlenbündels zu verändern, beispielsweise um den Strahlenverlauf an die Glasdicke anzupassen, ist es von Vorteil, wenn der Einstellwinkel verstellbar ist.

Zur Erzielung einer Totalreflexion des Strahlenbündels an der zweiten Oberfläche der Glasscheibe ist die Reflexionsfläche vorteilhaft so angeordnet, dass das Strahlenbündel einen vom Einfallslot gemessenen Einfallswinkel auf die erste Oberfläche zwischen 35° und 65° aufweist. Bei einem derartigen Einfallswinkel wird bei den meisten gängigen Glasmaterialien eine Totalreflexion des Strahlenbündels an der zweiten Oberfläche erzielt.

Für eine einfache Anpassung der Vorrichtung an unterschiedliche Glasmaterialien und/oder unterschiedliche Glasdicken kann der Einfallswinkel vorteilhaft auch verstellbar sein. Dies kann dadurch bewirkt werden, dass wie oben erwähnt, der Einstellwinkel des optischen Bauelements verstellbar ist oder aber auch der Winkel des Strahlenbündels vor dem optischen Bauelement veränderbar ist.

Um die für die Herstellung eines Trennspalts verwendbare Strahlungsleistung zu erhöhen, kann die Vorrichtung auch zumindest zwei optische Bauelemente zur Einleitung von zumindest zwei Strahlenbündel in die Glasscheibe umfassen, wodurch wie zuvor erwähnt, die Strahlungsleistung zweier Strahlenbündel sich in einer Erwärmungszone summieren.

Zur Erzielung einer besonders hohen Strahlungsleistung, kann jedem der zumindest zwei optischen Bauelemente eine eigene, getrennte Strahlungsquelle zugeordnet sein; alternativ ist es bei einer ausreichend kräftigen Strahlungsquelle auch möglich, ein Hauptstrahlenbündel mit Hilfe eines Strahlenteilers in zwei einzelne Strahlenbündel aufzuteilen, die jeweils mit einem optischen Bauelement an die Glasscheibe herangeführt werden.

Zur Erzielung einer besonders hohen Energiedichte des Strahlenbündels in der Glasscheibe kann zwischen der Strahlenquelle und der Strahlenaustrittsfläche des optischen Bauelements eine Fokussiereinrichtung angeordnet sein, die einen konvergenten Verlauf des Strahlenbündels in der Glasscheibe bewirkt. Dadurch kann ein Brennpunkt des Strahlenbündels in das Innere der Glasscheibe positioniert werden, der aufgrund der dort herrschenden hohen Energiedichte den Ausgangspunkt für die Herstellung des Trennspalts bildet. Zur Anpassung an unterschiedliche Glasdicken und Glasmaterialien kann die Fokussiereinrichtung eine verstellbare Brennweite aufweisen, weiters kann die Fokussiereinrichtung ein Hohlspiegelelement umfassen.

Zur Vermeidung von Kratzern an der Glasscheibe bei einem unvorhergesehenen Kontakt zwischen dem Bauelement und der zu bearbeitenden Glasscheibe, beispielsweise durch eine unvorgesehenen Form- und/oder Maßabweichung der Glasscheibe oder eine fehlerhafte Bewegung der Vorrichtung ist es von Vorteil, wenn das die Strahlaustrittsfläche am optischen Bauelement bildende Material weicher ist, als das Material der zu bearbeitenden Glasscheibe. Dadurch ist auch im Fall einer nicht gewollten Berührung vom optischen Bauelement und der Glasscheibe die Entstehung von qualitätsmindernden Kratzern an der Glasscheibe wirksam vermieden.

Die Vorrichtung kann, um eine hohe Leistung bei der Herstellung des Trennspalts zu erzielen als Strahlenquelle ein Lasergerät, ausgewählt aus einer Gruppe enthaltend Feststofflaser mit dotierten Trägermaterialien wie z.B. YAG, Glas, Al2O3, Korund, Saphir, Rubin oder Gaslaser mit Gas als aktivem Medium wie z.B. CO2, HeNe, CO, N2, Argon-Ionen, HeCd, Excimer, Metalldampf, Metallhalogenid umfassen.

Die Erfindung wird im nachfolgenden anhand der in den Zeichnungen dargestellten Ausführungsbeispiele näher erläutert.

Es zeigen jeweils in vereinfachter, schematischer Darstellung:
- Fig. 1: eine Darstellung des Verfahrens zum Herstellen eines Trennspalts in einer Glas- scheibe;
- Fig. 2: eine Vorrichtung zum Einleiten eines Strahlenbündels in eine Glasscheibe;
- Fig. 3: eine Draufsicht auf eine Oberfläche einer Glasscheibe mit zwei zusammenwirken- den Strahlenbündeln;
- Fig. 4: den Strahlengang der Strahlenbündel bei einer weiteren Ausführungsvariante des Verfahrens bzw. der Vorrichtung;
- Fig. 5: eine weitere Ausführungsform der Vorrichtung;
- Fig. 6: eine vergrößerte Darstellung eines Schnittpunkts zweier Strahlenbündel.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1 oder 5,5 bis 10.

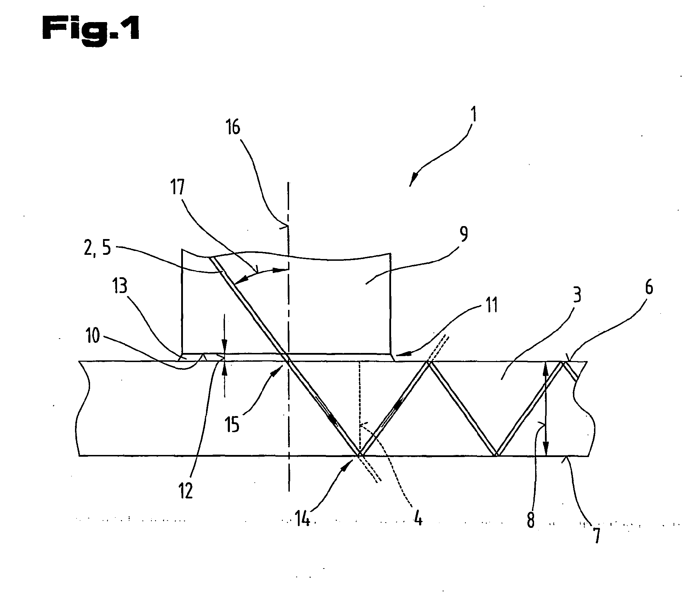

Fig. 1 zeigt ausschnittsweise eine Vorrichtung 1 zum Einleiten eines Strahlenbündels 2 in eine Glasscheibe 3. Da die Vorrichtung 1 für das Verfahren zum Herstellen eines Trennspaltes 4 in der Glasscheibe 3 eingesetzt wird und dazu beträchtliche Energiemengen benötigt werden, handelt es sich bei dem Strahlenbündel 2 um Hochenergiestrahlung, die von einer nicht dargestellten Strahlenquelle ausgesendet wird bzw. werden kann. Zur Erzielung einer hohen Energiedichte im Strahlenbündel 2, wird die Hochenergiestrahlung von einem nicht dargestellten Lasergerät ausgesendet, weshalb das Strahlenbündel 2 in diesem Fall auch als Laserstrahl 5 bezeichnet werden kann. Das Lasergerät kann dabei insbesondere durch einen Feststoff-Laser, beispielsweise einen YAG-Laser oder einen Gaslaser, wie z.B. einen C02-Laser gebildet sein.

Die Glasscheibe 3 kann aus allen denkbaren Glasmaterialien gebildet sein, wobei an dieser Stelle auf die Art des Glasmaterials und dessen Eigenschaften nicht näher eingegangen wird. Die Glasscheibe 3 weist eine erste Oberfläche 6 und eine gegenüberliegende, von dieser distanzierte zweite Oberfläche 7 auf, wobei der Abstand zwischen den Oberflächen 6, 7 einer Glasdicke 8 an der jeweils betrachteten Position entspricht. Die Glasdicke 8 kann dabei, wie in Fig. 1 dargestellt, konstant sein, jedoch auch von der jeweiligen Position an der Glasscheibe 3 abhängig sein. Die Glasscheibe 3 selbst kann, wie in Fig. 1 dargestellt, durch eine ebene Glastafel 9 mit ebenen Oberflächen 6, 7 gebildet sein, jedoch auch abweichend davon gekrümmte Oberflächen 6, 7 aufweisen.

Zur Einleitung des Strahlenbündels 2 in die Glasscheibe 3 umfasst die Vorrichtung 1 ein optisches Bauelement 9, durch das das Strahlenbündel 2 an die erste Oberfläche 6 der Glasscheibe 3 angenähert wird. Das optische Bauelement 9 kann dabei durch jedes, insbesondere feste Medium, aber auch flüssige Medium gebildet sein, das für die möglichst verlustarme Weiterleitung eines Strahlenbündels 2 zur Glasscheibe 3 geeignet ist. Neben der Weiterleitung des Strahlenbündels 2 kann das optische Bauelement 9 auch Mittel für die Brechung und/oder Reflexion des Strahlenbündels 2 umfassen und somit dementsprechend vielgestaltig ausgebildet sein. Beispielhaft sei hier angeführt die Ausbildung als Planplatte, Linse oder Linsengruppe oder als Spiegel und Kombinationen aus den vorgenannten Bauelementen.

Das optische Bauelement 9 weist eine der ersten Oberfläche 6 zugewandte Strahlaustrittsfläche 10 auf, durch die das Strahlenbündel 2 das optische Bauelement 9 in Richtung der Glasscheibe 3 verlassen kann. Damit der Übergang des Strahlenbündels 2 vom optischen Bauelement 9 in die Glasscheibe 3 möglichst verlustarm und vollständig erfolgt, ist in einem Zwischenraum 11, der durch einen Abstand 12 zwischen der Strahlaustrittsfläche 10 und der ersten Oberfläche 6 verursacht ist, eine Flüssigkeit 13 angeordnet. Diese Flüssigkeit 13 steht dabei sowohl mit der Strahlaustrittsfläche 10 des optischen Bauelements 9 und der ersten Oberfläche 6 der Glasscheibe 3 in direktem Kontakt. Die Strahlaustrittsfläche 10 und die erste Oberfläche 6 grenzen somit jeweils nicht an eine zwischen dem optischen Bauelement 9 und der Glasscheibe 3 befindliche Luftschicht, oder allgemeiner Gasschicht, sondern an die Flüssigkeit 13. Diese Flüssigkeit 13 besitzt für eine möglichst reflexionsfreie und brechungsfreie Weiterleitung des Strahlenbündels 2 an den Grenzflächen - der Strahlenaustrittsfläche 10 sowie der ersten Oberfläche 6 - ähnliche optische Eigenschaften wie das optische Bauelement 9 bzw. die Glasscheibe 3.

Insbesondere besitzt die Flüssigkeit 13 zumindest annähernd denselben Brechungsindex wie das Material der Glasscheibe 3 und auch des optischen Bauelements 9 an dessen Strahlaustrittsfläche 10. Die Flüssigkeit 13 besitzt daher entsprechend den Brechungsindizes der Glassorte der Glasscheibe 3 bzw. des optischen Bauelements 9 einen Brechungsindex vorzugsweise aus einem Bereich mit einer unteren Grenze von 1,2 und 1,9. Dies wird dadurch erreicht, dass die Flüssigkeit einen oder mehrere Bestandteile, ausgewählt aus einer Gruppe umfassend Wasser, Glyzerin, Gel, Netzmittel enthält. Das Netzmittel kann dabei die zuverlässige Benetzung sowohl der Strahlaustrittsfläche 10 als auch der ersten Oberfläche 6 mit der Flüssigkeit 13 sicherstellen.

Die Anforderungen an die Flüssigkeit 13 entsprechen - mechanische Eigenschaften ausgenommen - im Wesentlichen den Anforderungen an optische Kitte zur Verbindung optischer Flächen. Die Flüssigkeit 13 ist gewissermaßen glasklar, also optisch klar und für alle Arten von Strahlenbündeln 2, insbesondere alle Wellenlängen der verwendeten Hochenergiestrahlung gut durchlässig mit einem niedrigen Absorbtionsgrad. Das optische Bauelement 9 und die Glasscheibe 3 werden durch die Flüssigkeit 13 gewissermaßen optisch gekoppelt und wirken für das Strahlenbündel 2 annähernd wie ein einziger optisch weitgehend homogener Körper. Durch diese im wesentlichen reflexionsfreie und brechungsfreie Weiterleitung des Strahlenbündels 2 werden gegenüber einer Strahleinleitung ohne die Flüssigkeit 13 Reflexionsverluste an den Grenzflächen weitgehend vermieden und die an der Strahlaustrittsfläche 10 zur Verfügung stehende Strahlleistung fast vollständig in das zu bearbeitende Werkstück, in diesem Fall die Glasscheibe 3, weitergeleitet.

Zur Herstellung eines Trennspalts 4 in der Glasscheibe 3 wird der physikalische Effekt benutzt, dass ein Medium einen Teil einer ihn durchdringenden Strahlung absorbieren kann und die absorbierte Energie in eine andere Energieform, insbesondere Wärmeenergie, umgewandelt wird. Zur Herstellung eines Trennspalts 4 in der Glasscheibe 3 wird dazu der Strahlenverlauf des Strahlenbündels 2 in der Glasscheibe 3 so angelegt, dass durch eine örtliche Erwärmung der Glasscheibe 3 und dementsprechende Temperaturgradienten ein Spannungszustand mit Spannungsgradienten auftritt, der örtlich die Festigkeitsgrenzen der Glasscheibe 3 überschreitet und dadurch der Trennspalt 4 ausgebildet wird. Wie in Fig. 1 dargestellt, kann dieser Trennspalt 4 beispielsweise so entstehen, dass das Strahlenbündel 2 nach einmaligem Durchdringen der Glasscheibe 3 von einem Reflexionspunkt 14 an der zweiten Oberfläche 7 der Glasscheibe 3 reflektiert wird und durch die räumliche Nähe von dem im Reflexionspunkt 14 ankommenden und abgehenden Strahlenbündel 2 eine örtliche Temperaturspitze auftritt, die ein zur Schaffung eines Trennspalts 4 erforderliches Spannungsfeld entsprechender Höhe bewirkt. Das Strahlenbündel 2 kann dabei in jedem beliebigen Winkel durch die erste Oberfläche 6 in die Glasscheibe 3 eingeleitet werden, bei dem noch keine Totalreflexion an der ersten Oberfläche 6 erfolgt, also rechtwinkelig auf die erste Oberfläche 6 oder schräg. In Fig. 1 tritt das Strahlenbündel 2 nicht rechtwinkelig auf die erste Oberfläche 6 der Glasscheibe 3 in diese ein, sondern gegenüber einem auf die erste Oberfläche 6 senkrechten Einfallslot 16 um einen Einfallswinkel 17 schräg verlaufend, wodurch im Bereich des Reflexionspunkts 14 das ankommende und das reflektierte Strahlenbündel nicht zusammenfallen sondern verschiedene Richtungen aufweisen.

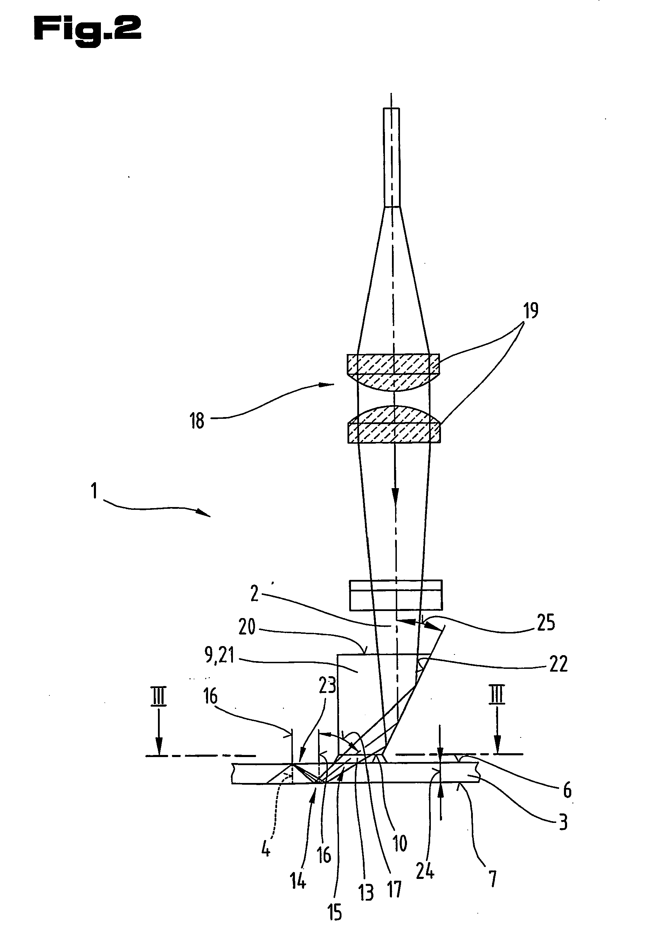

In Fig. 2 ist eine weitere mögliche Ausführungsform der Vorrichtung 1 zum Einleiten eines Strahlenbündels 2 in eine Glasscheibe 3 schematisch dargestellt. Das von einer nicht dargestellten Strahlungsquelle, insbesondere einem Lasergerät, abgestrahlte, in Fig. 2 von oben kommende Strahlenbündel 2, erhält durch eine Fokussiereinrichtung 18, die beispielsweise zwei Sammellinsen 19 umfasst, einen sich gebündelten, konvergenten Verlauf, das heißt, der Querschnitt des Strahlenbündels 2 nimmt in seinem Verlauf im Anschluss an die Fokussiereinrichtung 18 ab. Der Strahlengang des Strahlenbündels 2 verläuft in Folge durch eine Strahleintrittsfläche 20 in das optische Bauelement 9, das in dieser Ausführung durch ein Prisma 21 gebildet ist. Dieses Prisma 21 besitzt eine Reflexionsfläche 22, durch die das ursprünglich parallel zum Einfallslot 16 verlaufende Strahlenbündel 2 um den Einfallswinkel 17 umgelenkt wird und beim Eintrittspunkt 15 auf der ersten Oberfläche 6 der Glasscheibe 3 in diese schräg eintritt.

Das Prisma 21 und die erste Oberfläche 6 sind dabei wieder mit Hilfe der Flüssigkeit 13 optisch gekoppelt, wodurch das Strahlenbündel 2 seine Richtung beim Übergang vom Prisma 21 in die Glasscheibe 3 im Wesentlichen beibehält und der Übergang im Wesentlichen reflexionsfrei und brechungsfrei erfolgt.

Das weitere Verhalten des Strahlenbündels 2 innerhalb der Glasscheibe 3 ist dabei abhängig vom Einfallswinkel 17 und der Reflexion des Strahlenbündels 2 im Reflexionspunkt 14 an der zweiten Oberfläche der Glasscheibe 3. Ist der Einfallswinkel 17 nämlich größer als ein Grenzwinkel der Totalreflexion an der zweiten Oberfläche 7 der Glasscheibe 3, erfolgt im Reflexionspunkt 14 eine Totalreflexion, das heißt, das Strahlenbündel 2 wird an der zweiten Oberfläche 7 vollständig reflektiert und wieder zurück in das Innere der Glasscheibe 3 umgelenkt. Bei parallelen Oberflächen 6 und 7 der Glasscheibe 3 wird das Strahlenbündel 2 in Folge an den gegenüberliegenden Oberflächen 6 und 7 jeweils vollständig reflektiert bis es auf ein Hindernis, zum Beispiel einen Rand der Glasscheibe 3 trifft. Die vom Strahlenbündel 2 transportierte Strahlungsenergie nimmt dabei durch Absorption innerhalb der Glasscheibe 3 sukzessive ab, wodurch nur in der Nähe des Eintrittspunktes 15 zur Bildung eines Trennspalts 4 ausreichende Energieintensitäten vorhanden sind.

Ist der Einfallswinkel 17 kleiner als der Grenzwinkel der Totalreflexion, wird das in die Glasscheibe 3 eingeleitete Strahlenbündel 2 an der ersten und zweiten Oberfläche 6, 7 nicht vollständig reflektiert und ein gewisser Anteil des Strahlenbündels 2 und damit auch der Strahlungsenergie verlässt die Glasscheibe 3, wie in Fig. 1 strichliert dargestellt, am Reflexionspunkt 14 sowie an den daran anschließenden weiteren Reflexionspunkten.

Die in Fig. 2 dargestellte, konvergente Ausbildung des Strahlenbündels 2 im Anschluss an die Fokussiereinrichtung 18 kann dazu benutzt werden, die Position, an der der Trennspalt 4 in der Glasscheibe 3 hergestellt wird, zu beeinflussen. Durch die Konvergenz des Strahlenbündels 2 in der Ausführung gemäß Fig. 2 gibt es zwangsläufig nach der Fokussiereinrichtung 18 einen Brennpunkt 23, in dem das Strahlenbündel 2 einen minimalen Querschnitt und damit die höchste Energiedichte aufweist. In der Ausführung gemäß Fig. 2 ist der Brennpunkt 23 durch die Fokussiereinrichtung 18 so eingestellt, dass er nach dem ersten Reflexionspunkt 14 an der zweiten Oberfläche 7 exakt an oder knapp unterhalb der ersten Oberfläche 6 liegt. Durch die starke Energiekonzentration im Brennpunkt 23 wird die Bildung des Trennspalts 4 bei dieser Ausführungsform durch die Position des Brennpunktes 23 bestimmt. Durch die Lage des Brennpunktes 23 an der reflektierenden Grenzschicht an der ersten Oberfläche 6 ist der Verlauf des Strahlenbündels 2 zumindest annähernd symmetrisch bezüglich des Brennpunktes 23, wodurch sich ein für die Ausbildung des Trennspalts 4 günstiger, bezüglich des Brennpunktes 23 annähernd symmetrischer Spannungszustand einstellt.

Die Lage des Brennpunktes 23 wird im wesentlichen beeinflusst von der Brennweite der Fokussiereinrichtung 18, dem Einfallswinkel 17 beim Eintritt des Strahlenbündels 2 in die Glasscheibe 3 sowie einer Dicke 24 der Glasscheibe 3 im Bereich des Eintrittspunktes 15. Bei einer vorgegebenen Dicke 24 der Glasscheibe 3 kann somit die Position des Brennpunktes 23 durch Änderung des Einfallswinkels 17 und Veränderung der Brennweite der Fokussiereinrichtung 18 eingestellt werden. Der Einfallswinkel 17 ist dabei abhängig von einem Einstellwinkel 25, den die, in diesem Ausführungsbeispiel ebene, Reflexionsfläche 22 des Prismas 21 gemessen von Einfallslot 16 einnimmt. Eine Winkeländerung des Einstellwinkels 25 bewirkt dabei eine Winkeländerung des Einfallswinkels 17 im doppelten Ausmaß. Da der Zwischenraum 11 zwischen der Strahlaustrittsfläche 10 und der ersten Oberfläche 6 von der Flüssigkeit 13 erfüllt ist, kann der Einstellwinkel 25 durch geringfügiges Schwenken des Prismas um eine zur Zeichnungsfläche rechtwinkelige Achse und damit auch der Einfallswinkel 17 des Strahlenbündels innerhalb gewisser Grenzen verstellt werden, wodurch der Brennpunkt 23 auch bei unterschiedlichen Dicken 24 verschiedener Glasscheiben 3 jeweils knapp unter die erste Oberfläche 6 der Glasscheibe 3 positioniert werden kann.

Bei der Ausführungsform gemäß Fig. 2 erfolgt an der zweiten Oberfläche 7 eine Totalreflexion des Strahlenbündels 2, was dadurch bewirkt ist, dass der Einfallswinkel 17 größer ist als der Grenzwinkel der Totalreflexion, der sich aus dem Verhältnis der Brechungsindizes an der von der zweiten Oberfläche 7 gebildeten Grenzfläche errechnet. Wird für die Glasscheibe 3 vereinfacht ein Brechungsindex von 1,5 angenommen und weiters angenommen, dass die zweite Oberfläche 7 an einen Luftfilm grenzt, der einen Brechungsindex von etwa 1,0 aufweist, ergibt sich ein Grenzwinkel der Totalreflexion von etwa 42°. Im dargestellten Ausführungsbeispiel beträgt der Einfallswinkel 17 etwa 52° und ist somit größer als der Grenzwinkel der Totalreflexion mit 41,8°. Dieser Unterschied von etwa 10° Winkelgraden stellt eine Totalreflexion an der zweiten Oberfläche 7 auch dann sicher, wenn das Strahlenbündel 2 beim Übergang vom Prisma 21 beim Eintreten in die Flüssigkeit 13 aufgrund unterschiedlicher Brechungsindizes zwischen Prisma 21 und Flüssigkeit 13 und/oder zwischen Flüssigkeit 13 und Glasscheibe 3 in Richtung zum Einfallslot 16 gebeugt werden sollte. In diesem Fall, würde dann der Einfallswinkel 17 an der zweiten Überfläche 7 trotzdem noch über dem Grenzwinkel der Totalreflexion liegen.

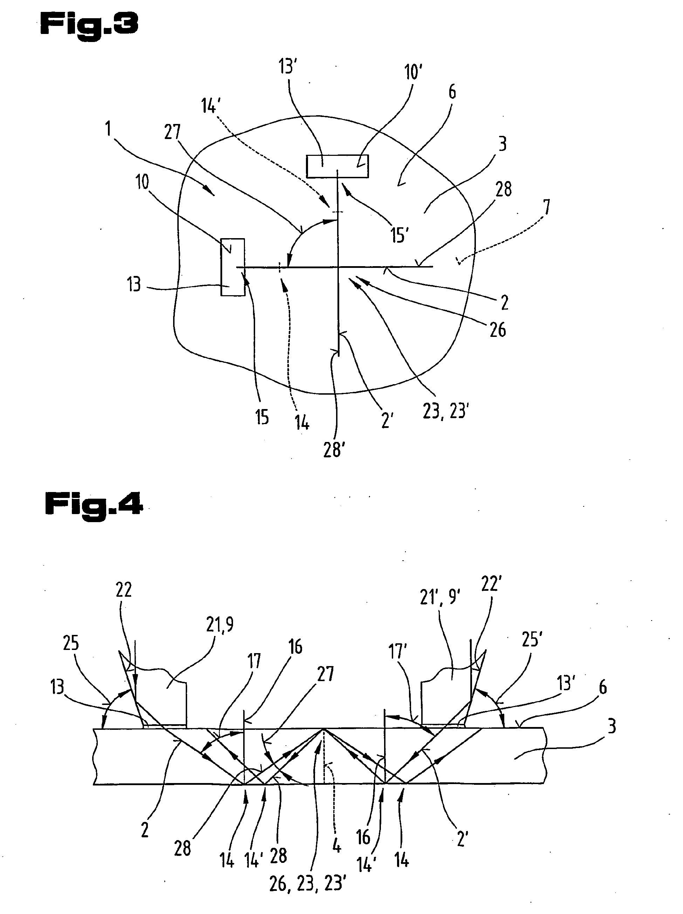

Fig. 3 zeigt eine vereinfachte schematische Darstellung der Strahlengänge eines ersten Strahlenbündels 2 und eines zweiten Strahlenbündels 2' bei einer weiteren Ausführungsform der Vorrichtung 1, geschnitten entlang der Linie III - III in Fig. 2. Bei dieser Ausführungsform der Vorrichtung 1 werden gleichzeitig zwei Strahlenbündel 2, 2' in die Glasscheibe 3 eingeleitet, wodurch bei geeigneter Strahlführung eine höhere Energieleistung zur Bildung des Trennspalts 4 erzielt werden kann und dadurch die Verarbeitungsgeschwindigkeit erhöht werden kann. Bei dieser Ausführungsform werden an zwei voneinander distanzierten Eintrittspunkten 15, 15' Strahlenbündel 2, 2' in verschiedenen Richtungen in die Glasscheibe 3 eingeleitet. An den Eintrittspunkten 15, 15' sind die optischen Bauelemente 9, 9' bzw. Prismen 21, 21' mit ihren Strahlaustrittsflächen 10, 10' über eine Flüssigkeit 13, 13' mit der ersten Oberfläche 6 optisch gekoppelt, wodurch die Strahlenbündel 2, 2' im Wesentlichen brechungsfrei und reflexionsfrei in die Glasscheibe 3 eingeleitet werden.

Die Strahlenbündel 2, 2' können dabei, wie in der Ausführungsform gemäß Fig. 2, konvergent ausgebildet sein und die Position der Eintrittspunkte 15, 15' auf der ersten Oberfläche 6 ist dabei so eingestellt, dass sich die Strahlenbündel 2, 2', nach einer ersten Reflexion in jeweils einem Reflexionspunkt 14, 14' an der zweiten Oberfläche 7, in einem gemeinsamen Schnittpunkt 26 treffen, wodurch eine weitere Erhöhung der Energiekonzentration und damit erleichterte Ausbildung eines Trennspalts 4 erzielt werden kann.

Um einen ausgeprägten, scharf abgegrenzten Schnittpunkt 26 zu erhalten, beträgt ein Winkel 27 zwischen zwei Verlaufsebenen 28, 28' der beiden Strahlbündel 2, 2' etwa 90°. Die Verlaufsebenen 28, 28' stehen dabei in Fig. 3 rechtwinkelig zur Zeichenebene. Bei konvergenten Strahlenbündeln 2, 2' ist es weiters möglich, die Brennpunkte 23, 23' der Strahlenbündel 2, 2' durch Einstellung der Brennweite ebenfalls in den Schnittpunkt 26 zu legen, was eine weitere Energiekonzentration im Schnittpunkt 26 bewirkt.

Fig. 4 zeigt eine weitere Möglichkeit, zwischen Verlaufsebenen 28, 28' von zwei einander in einem Schnittpunkt 26 schneidenden Strahlenbündeln 2, 2' einen Winkel 27 zu erzielen. Dies erfolgt im dargestellten Ausführungsbeispiel dadurch, dass die zwei Strahlenbündel 2, 2' mit unterschiedlichen Einfallswinkeln 17, 17' bezüglich des Einfallslots 16 in die Glasscheibe 3 eingeleitet werden. Dies kann zum Beispiel dadurch bewirkt werden, dass die Reflexionsflächen 22, 22' zweier Prismen 21, 21' einen unterschiedlichen Einstellwinkel 25, 25' aufweisen. Weiters ist es möglich, durch unterschiedliche optische Bauelemente 9, 9' ebenfalls unterschiedliche Einfallswinkel 17, 17' zu bewirken.

Zusätzlich zur höheren Energiekonzentration durch Addition der Einzelleistungen der beiden Strahlenbündel 2, 2' im Schnittpunkt 26 kann durch voneinander abweichende Strahlenverläufe der beiden Strahlenbündel 2, 2' auch verhindert werden, dass ein Strahlenbündel 2 oder 2' in das zweite bzw. jeweils andere optische Bauelement 9, 21 bzw. 9', 21' eindringt und dort Schäden verursachen kann.

Natürlich ist es auch möglich, einen Schnittpunkt 26 aus zwei Strahlenbündeln 2, 2' zu bilden, in dem die Anordnung nach Fig. 3 kombiniert wird mit einer Anordnung nach Fig. 4, das heißt, dass sowohl, in Richtung des Einfallslots 16 betrachtet, unterschiedliche Richtungen der Strahlenbündel 2, 2' eingesetzt werden, als auch - wie in Fig. 4 - unterschiedliche Einfallswinkel 17, 17' der zwei Strahlenbündel 2, 2'.

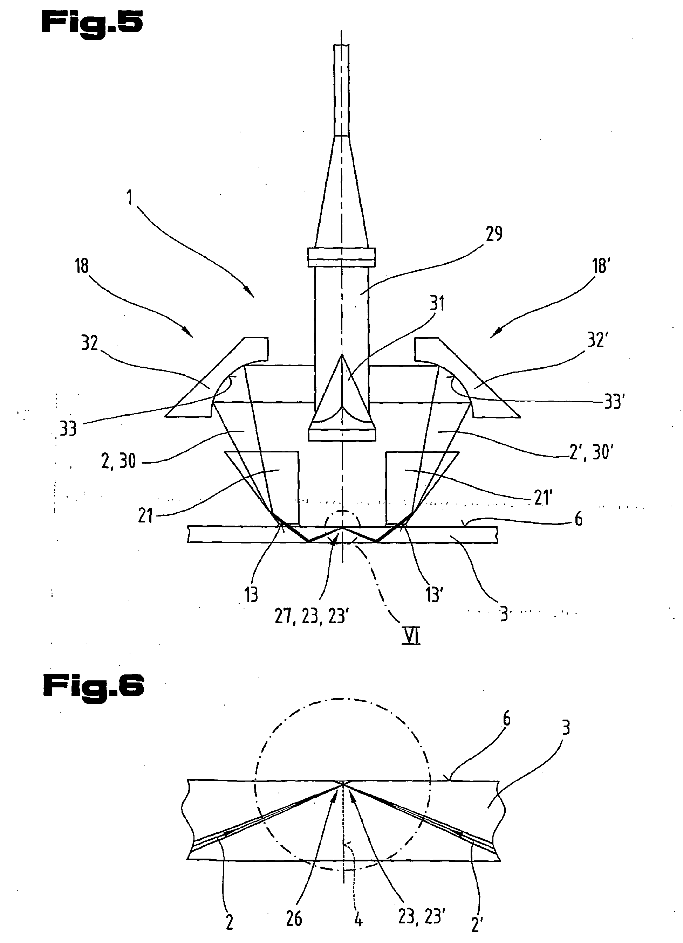

In Fig. 5 ist eine weitere Ausführungsform einer Vorrichtung 1 zum Einleiten eines Strahlenbündels 2 in eine Glasscheibe 3 dargestellt. Dabei wird ein Hauptstrahlenbündel 29 in der Vorrichtung 1 in zwei getrennte Strahlenbündel 2, 2', die in diesem Fall auch als Teilstrahlenbündel 30, 30' bezeichnet werden können, aufgeteilt. Dazu wird in den Strahlengang des Hauptstrahlenbündels 29 ein Strahlenteiler 31 angeordnet, der das Hauptstrahlenbündel 29 in zumindest zwei Teilstrahlenbündel 30, 30' aufspaltet. Die Aufteilung des Hauptstrahlenbündels 29 durch den Strahlenteiler 31 kann dabei physikalisch, geometrisch oder auch periodisch erfolgen. Eine physikalische Strahlteilung kann durch optisch wirksame Flächen mit einem geeigneten Verhältnis aus Transmissionsgrad und Reflexionsgrad bewirkt werden. Eine geometrische Strahlteilung wird dadurch erzielt, indem ein größerer Bündelquerschnitt eines Hauptstrahlenbündels 29 in zwei oder mehrere kleinere Bündelquerschnitte der Teilstrahlenbündel 30, 30' aufgeteilt wird. Eine periodische Strahlteilung kann erfolgen, indem aus einem Dauerlichtstrom eines Hauptstrahlenbündels 29 zwei Wechsellichtströme mit zeitlich versetzten Halbperioden erzeugt werden, beispielsweise durch eine unter 45° zur Bündelrichtung angeordnete, verspiegelte Sektorenblende, die den Lichtstrom abwechselnd durchlässt oder ablenkt, oder durch eine schwingende Spiegelblende.

Die beiden Teilstrahlenbündel 30, 30' werden so in die Glasscheibe 3 eingeleitet, dass sich diese wieder in einem gemeinsamen Schnittpunkt 26 treffen, wodurch an dieser Position die Bildung des Trennspalts 4 erfolgt.

Wie Fig. 5 weiters zu entnehmen ist, können die beiden Teilstrahlbündel 30, 30' jeweils mit einer Fokussiereinrichtung 18, 18' in einen konvergenten Verlauf gebracht werden, wobei die Brennpunkte 23, 23' der beiden Teilstrahlenbündel 30, 30' so eingestellt sind, dass diese insbesondere mit dem Schnittpunkt 26 zumindest annähernd exakt an der ersten Oberfläche 6 zusammenfallen. Die Fokussiereinrichtungen 18, 18' bestehen in dieser Ausführung nicht aus einem Linsensystem, sondern aus Hohlspiegelelementen 32, 32' mit konkaven Reflexionsflächen 33, 33'.

Die Vorrichtung 1 zum Einleiten des oder der Strahlenbündel 2 kann insbesondere in Form eines Laserkopfs ausgebildet sein, der während der Herstellung des Trennspalts 4 mittels eines nicht dargestellten Bewegungsorgans an der ersten Oberfläche 6 der Glasscheibe 3 entlang des herzustellenden Trennspalts 4 bewegt wird. Die Vorrichtung 1 bzw. der Laserkopf kann dabei insbesondere auch Mittel umfassen, die sicherstellen, dass der Zwischenraum 11 zwischen der oder den Strahlaustrittsflächen und der ersten Oberfläche 6 der Glasscheibe während des Verfahrens zuverlässig mit Flüssigkeit 13 gefüllt ist.

Fig. 6 zeigt einen vergrößerten Ausschnitt des Bereiches VI in Fig. 5, in dem sich zwei Strahlenbündel 2, 2' in einem gemeinsamen Schnittpunkt 26 treffen, und in diesem Schnittpunkt 26 jeweils auch die Brennpunkte 23, 23' der beiden Strahlenbündel 2, 2' fallen. Der Abstand des Schnittpunkts 26 von der ersten Oberfläche 6 der Glasscheibe 3 ist dabei möglichst gering und geht bei optimaler Einstellung der Strahlenbündel 2, 2' gegen Null.

Die erfindungsgemäße Kombination von zwei oder mehr Strahlenbündeln, um die örtliche Energiedichte kann auch unabhängig von der beschriebenen Vorrichtung zum Einleiten der Strahlenbündel 2, 2' in die Glasscheibe 3 durch andere Vorrichtungen erfolgen, solange sich zwei Strahlenbündel 2, 2' wie in den Figuren 3, 4, 5 oder 6 im Bereich der ersten Oberfläche 6 nach Reflexion an der zweiten Oberfläche 7 in einem Schnittpunkt 27 treffen und sich dadurch die eingebrachten Strahlungsenergien im Schnittpunkt 27 addieren.

Neben dem Auslösen von hohen örtlichen thermischen Spannungen durch das oder die Strahlenbündel kann durch die hohe örtliche Energiekonzentration die molekulare Struktur der Glasscheibe örtlich verändert werden, insbesondere die chemische Verbindung des Glases teilweise aufgelöst bzw. umgewandelt werden, wodurch einerseits die Festigkeitsgrenzen örtlich sinken können und gleichzeitig der Absorbtionsgrad erhöht wird, wodurch der örtliche Energieeintrag weiter steigt und die Bildung des Trennspalts leichter ausgelöst bzw. zusätzlich gefördert wird.

Die Ausführungsbeispiele zeigen mögliche Ausführungsvarianten der Vorrichtung 1 zum Einleiten eines Strahlenbündels 2 in eine Glasscheibe 3, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvarianten möglich sind, vom Schutzumfang mit umfasst.

Der Ordnung halber sei abschließend darauf hingewiesen, dass zum besseren Verständnis des Aufbaus der Vorrichtung 1 diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

### Bezugszeichenaufstellung

- 1: Vorrichtung
- 2: Strahlenbündel 2, 2'
- 3: Glasscheibe
- 4: Trennspalt
- 5: Laserstrahl

- 6: Oberfläche
- 7: Oberfläche
- 8: Glasdicke
- 9: optisches Bauelement
- 10: Strahlaustrittsfläche

- 11: Zwischenraum
- 12: Abstand
- 13: Flüssigkeit
- 14: Reflexionspunkt 14, 14'
- 15: Eintrittspunkt 15, 15'

- 16: Einfallslot
- 17: Einfallswinkel 17, 17'
- 18: Fokussiereinrichtung 18, 18'
- 19: Sammellinse
- 20: Strahleintrittsfläche

- 21: Prisma
- 22: Reflexionsfläche
- 23: Brennpunkt
- 24: Dicken
- 25: Einstellwinkel 25, 25'

- 26: Schnittpunkt
- 27: Winkel
- 28: Verlaufsebene 28, 28'
- 29: Hauptstrahlenbündel
- 30: Teilstrahlenbündel 30, 30'

- 31: Strahlenteiler
- 32: Hohlspiegelelement
- 33: Reflexionsfläche

## Patentansprüche

1. Verfahren zum Herstellen eines Trennspalts (4) in einer Glasscheibe (3) mit einem Strahlenbündel (2) aus Hochenergiestrahlung einer Strahlenquelle, insbesondere Laserstrahlung, bei dem das Strahlenbündel (2) beim einfachen oder mehrfachen Durchdringen von einer ersten Oberfläche (6) der Glasscheibe (3) zu einer gegenüberliegenden und von dieser distanzierten zweiten Oberfläche (7) der Glasscheibe (3) diese örtlich erwärmt und **dadurch** auftretende Wärmespannungen den Trennspalt (4) in der Glasscheibe (3) öffnen, wobei das Strahlenbündel (2) an der ersten Oberfläche (6) im wesentlichen reflexionsfrei und brechungsfrei eingeleitet wird, **dadurch gekennzeichnet, daß** das Strahlenbündel (2) durch ein optisches Bauelement (9), insbesondere ein Prisma (21), bis zu einer Strahlaustrittsfläche (10) desselben hindurchgeführt wird und danach im wesentlichen brechungsfrei und reflexionsfrei in eine unmittelbar mit der Strahlaustrittsfläche (10) in Kontakt stehende Flüssigkeit (13) und von dieser in die unmittelbar mit der Flüssigkeit (13) in Kontakt stehende erste Oberfläche (6) der Glasscheibe (3) in die Glasscheibe (3) eingeleitet wird.

2. Verfahren nach Anspruch 1, **dadurch gekennzeichnet, dass** die Flüssigkeit (13) zumindest annähernd denselben Brechungsindex wie das Material der Glasscheibe (3) aufweist.

3. Verfahren nach Anspruch 1 oder 2, **dadurch gekennzeichnet, dass** die Flüssigkeit (13) einen oder mehrere Bestandteile ausgewählt aus einer Gruppe umfassend Wasser, Glyzerin, Gel, Netzmittel enthält.

4. Verfahren nach Anspruch 2 oder 3, dass der Brechungsindex der Flüssigkeit (13) vorzugsweise aus einem Bereich mit einer unteren Grenze von 1,2 und 1,9 gewählt ist.

5. Verfahren nach einem der Ansprüche 1 bis 4, **dadurch gekennzeichnet, dass** das Strahlenbündel (2) mit einem, bezogen auf ein Einfallslot (16) in einem Eintrittspunkt (15) des Strahlenbündels (2), schrägen Einfallswinkel (17) durch die erste Oberfläche (6) in die Glasscheibe (3) eingeleitet wird.

6. Verfahren nach Anspruch 6, **dadurch gekennzeichnet, dass** der Einfallswinkel (17) des Strahlenbündels (2) an der ersten Oberfläche (6) so gewählt ist, dass an der zweiten Oberfläche (7) der Glasscheibe (3) eine Totalreflexion des Strahlenbündels (2) erfolgt.

7. Verfahren nach einem der Ansprüche 1 bis 6, **dadurch gekennzeichnet, dass** das Strahlenbündel (2) durch eine Fokussiereinrichtung (18) im oder vor dem optischen Bauelement (9) in einen konvergenten Verlauf gebracht wird und beim Eintritt in die Glasscheibe (3) konvergent gebündelt verläuft.

8. Verfahren nach Anspruch 7 , **dadurch gekennzeichnet, dass** ein Brennpunkt (23) des konvergierenden Strahlenbündels (2) zumindest annähernd an der ersten Oberfläche (6) oder der zweiten Oberfläche (7) der Glasscheibe (3) positioniert wird.

9. Verfahren nach einem der Ansprüche 1 bis 8, **dadurch gekennzeichnet, dass** die Bildung des Trennspalts (4) mit zumindest zwei Strahlenbündeln (2, 2') erfolgt.

10. Verfahren nach Anspruch 9, **dadurch gekennzeichnet, dass** die zumindest zwei Strahlenbündel (2, 2') zumindest annähernd in einem gemeinsamen Schnittpunkt (26) im Inneren der Glasscheibe (3), vorzugsweise im Bereich der ersten Oberfläche (6) oder der zweiten Oberfläche (7) zusammenwirken.

11. Verfahren nach Anspruch 9 oder 10, durch **gekennzeichnet**, dass die zumindest zwei Strahlenbündel (2, 2') durch Strahlteilung aus einem Hauptstrahlenbündel (29) gebildet werden.

12. Vorrichtung (1) zum Einleiten eines Strahlenbündels (2) aus Hochenergiestrahlung einer Strahlenquelle, insbesondere Laserstrahlung, in eine Glasscheibe (3), umfassend zumindest ein optisches Bauelement (9), insbesondere ein Prisma (21), mit einer zu einer ersten Oberfläche (6) der Glasscheibe (3) einen Abstand (12) aufweisenden Strahlaustrittsfläche (10), **dadurch gekennzeichnet, dass** an der Strahlaustrittsfläche (10) eine mit dieser unmittelbar in Kontakt stehende Flüssigkeit (13) angeordnet ist, die gleichzeitig mit der ersten Oberfläche (6) der Glasscheibe (3) in unmittelbarem Kontakt steht.

13. Vorrichtung (1) nach Anspruch 12, **dadurch gekennzeichnet, dass** zumindest zwei optische Bauelemente (9) zur Einleitung von zumindest zwei Strahlenbündeln (2, 2') in die Glasscheibe (3) vorhanden sind.

14. Vorrichtung (1) nach Anspruch 12 oder 13, **dadurch gekennzeichnet, dass** zwischen der Strahlenquelle und der Strahlaustrittsfläche (10) des optischen Bauelements (9) eine Fokussiereinrichtung (18) angeordnet ist.

15. Vorrichtung (1) nach einem der Ansprüche 12 bis 14, **dadurch gekennzeichnet, dass** das die Strahlaustrittsiläche (10) am optischen Bauelement (9) bildende Material weicher ist, als das Material der Glasscheibe (3).

## Claims

1. Method of producing a dividing gap (4) in a glass pane (3) by means of a beam (2) of high-energy radiation from a radiation source, in particular laser radiation, whereby as the beam (2) passes once or several times from a from a first surface (6) of the glass pane (3) to a second surface (7) of the glass pane (3) lying opposite and spaced apart from it, it heats the latter locally and the thermal stress generated opens the dividing gap (4) in the glass pane (3) as a result, and the beam (2) is transmitted to the first surface (6) essentially without reflection and without refraction, **characterised in that** the beam (2) is directed through an optical component (9), in particular a prism (21), to a beam exit surface (10) thereof and is then transmitted essentially without refraction and without reflection to a liquid (13) in direct contact with the beam exit surface (10) and from it to the glass pane (3) through the first surface (6) of the glass pane (3) in direct contact with the liquid (13).

2. Method as claimed in claim 1, **characterised in that** the liquid (13) has at least approximately the same refractive index as the material of the glass pane (3).

3. Method as claimed in claim 1 or 2, **characterised in that** the liquid (13) contains one or more substances selected from a group comprising water, glycerine, gel or wetting agent.

4. Method as claimed in claim 2 or 3, **characterised in that** the refractive index of the liquid (13) is preferably selected from a range with a lower limit of 1.2 and 1.9.

5. Method as claimed in one of claims 1 to 4, **characterised in that** the beam (2) is transmitted to the glass pane (3) via the first surface (6) through an entry point (15) of the beam (2) at an oblique angle of incidence (17) relative to an incidence slot (16).

6. Method as claimed in claim 5, **characterised in that** the angle of incidence (17) of the beam (2) on the first surface (6) is selected so that a total reflection of the beam (2) occurs on the second surface (7) of the glass pane (3).

7. Method as claimed in one of claims 1 to 6, **characterised in that** the beam (2) is directed along a convergent path by means of a focussing unit (18) in or in front of the optical component (9) and extends in a convergently bundled arrangement on entering the glass pane (3).

8. Method as claimed in claim 7, **characterised in that** a focal point (23) of the converging beam (2) is positioned at least approximately on the first surface (6) or the second surface (7) of the glass pane (3).

9. Method as claimed in one of claims 1 to 8, **characterised in that** the dividing gap (4) is produced by means of at least two beams (2, 2').

10. Method as claimed in claim 9, **characterised in that** the at least two beams (2, 2') co-operate at least approximately at a common cutting point (26) in the interior of the glass pane (3), preferably in the region of the first surface (6) or the second surface (7).

11. Method as claimed in claim 9 or 10, **characterised in that** the at least two beams (2, 2') are formed by beam splitting a main beam (29).

12. Device (1) for transmitting a beam (2) of high-energy radiation from a radiation source, in particular laser radiation, through a glass pane (3), comprising at least one optical component (9), in particular a prism (21), with a beam exit surface (10) disposed at a distance (12) from a first surface (6) of the glass pane (3), **characterised in that** a liquid (13) is disposed at the beam exit surface (10) and in direct contact with it, which is simultaneously in direct contact with the first surface (6) of the glass pane (3).

13. Device (1) as claimed in claim 12, **characterised in that** at least two optical components (9) are provided as a means of transmitting at least two beams (2, 2') through the glass pane (3).

14. Device (1) as claimed in claim 12 or 13, **characterised in that** a focussing unit (18) is disposed between the beam source and the beam exit surface (10) of the optical component (9).

15. Device (1) as claimed in one of claims 12 to 14, **characterised in that** the material forming the beam exit surface (10) on the optical component (9) is softer than the material of the glass pane (3).

## Revendications

1. Procédé de création d'une fente de séparation (4) dans une plaque de verre (3) avec un faisceau de rayons (2) d'un rayonnement haute énergie d'une source de rayonnement, en particulier de rayons laser, dans lequel le faisceau de rayons (2), lors du passage simple ou multiple d'une première surface (6) de la plaque de verre (3) à une seconde surface (7) de la plaque de verre (3) opposée et espacée de celle-ci, chauffe celle-ci localement, et des contraintes thermiques ainsi produites ouvrent la fente de séparation (4) dans la plaque de verre (3), où le faisceau de rayons (2) est introduit à la première surface (6) sensiblement sans réflexion et sans réfraction, **caractérisé en ce que** le faisceau de rayons (2) est amené à passer à travers un composant optique (9), en particulier un prisme (21) jusqu'à une face de sortie de rayons (10) de celui-ci et est introduit ensuite sensiblement sans réfraction et sans réflexion dans un liquide (13) directement en contact avec la face de sortie de rayons (10) et de celui-ci dans la première surface (6) de la plaque de verre (3), directement en contact avec le liquide (13), dans la plaque de verre (3).

2. Procédé selon la revendication 1, **caractérisé en ce que** le liquide (13) présente au moins approximativement le même indice de réfraction que le matériau de la plaque de verre (3).

3. Procédé selon la revendication 1 ou 2, **caractérisé en ce que** le liquide (13) contient un ou plusieurs composants sélectionnés d'un groupe comprenant l'eau, la glycérine, un gel, un agent mouillant.

4. Procédé selon la revendication 2 ou 3, **caractérisé en ce que** l'indice de réfraction du liquide (13) est sélectionné de préférence d'une plage avec une limite inférieure de 1,2 et 1,9.

5. Procédé selon l'une des revendications 1 à 4, **caractérisé en ce que** le faisceau de rayons (2) est introduit selon un angle d'incidence oblique (17), par rapport à une fente d'incidence (16) dans un point d'entrée (15) du faisceau de rayons (2), à travers la première surface (6) dans la plaque de verre (3).

6. Procédé selon la revendication 5, **caractérisé en ce que** l'angle d'incidence (17) du faisceau de rayons (2) à la première surface (6) est choisi de façon à obtenir à la deuxième surface (7) de la plaque de verre (3) une réflexion totale du faisceau de rayons (2).

7. Procédé selon l'une des revendications 1 à 6, **caractérisé en ce que** le faisceau de rayons (2) est amené par une installation de focalisation (18) dans ou devant le composant optique (9) en un tracé convergent et, lors de l'entrée dans la plaque de verre (3), s'étend en faisceau convergent.

8. Procédé selon la revendication 7, **caractérisé en ce qu'**un foyer (23) du faisceau de rayons convergent (2) est positionné au moins approximativement à la première surface (6) ou à la seconde surface (7) de la plaque de verre (3).

9. Procédé selon l'une des revendications 1 à 8, **caractérisé en ce que** la formation de la fente de séparation (4) a lieu avec au moins deux faisceaux de rayons (2, 2').

10. Procédé selon la revendication 9, **caractérisé en ce que** les au moins deux faisceaux de rayons (2, 2') coopèrent au moins approximativement à une intersection commune (26) à l'intérieur de la plaque de verre (3), de préférence dans la zone de la première surface (6) ou de la seconde surface (7).

11. Procédé selon la revendication 9 ou 10, **caractérisé en ce que** les au moins deux faisceaux de rayons (2, 2') sont formés par une séparation d'un faisceau de rayons principal (29).

12. Dispositif (1) pour introduire un faisceau de rayons (2) en rayonnement de haute énergie d'une source de rayonnement, en particulier de rayons laser, dans une plaque de verre (3), comprenant au moins un composant optique (9), en particulier un prisme (21), avec une face de sortie de rayons (10) présentant relativement à une première surface (6) de la plaque de verre (3) un écart (12), **caractérisé en ce qu'**il est disposé à la face de sortie de rayons (10) un liquide (13) directement en contact avec celle-ci qui est en même temps en contact direct avec la première surface (6) de la plaque de verre (3).

13. Dispositif (1) selon la revendication 12, **caractérisé en ce que** sont prévus au moins deux composants optiques (9) pour introduire au moins deux faisceaux de rayons (2, 2') dans la plaque de verre (3).

14. Dispositif (1) selon la revendication 12 ou 13, **caractérisé en ce qu'**une installation de focalisation (18) est disposée entre la source de rayonnement et la face de sortie de rayons (10) de l'élément optique (9).

15. Dispositif (1) selon l'une des revendications 12 à 14, **caractérisé en ce que** le matériau formant la face de sortie de rayons (10) au composant optique (9) est plus mou que le matériau de la plaque de verre (3).
